# EUROPEAN PATENT APPLICATION

(11) **EP 0 807 874 A2**
(43) Date of publication of application: **19.11.1997**
(21) Application number: 97107788.8
(22) Date of filing: 13.05.1997
(51) Int. Cl.: G05B 19/042

(54) **Electrical apparatus having programmable settings provided by a single dip switch and a multiposition selector switch**

(30) Priority: 13.05.1996 US 645306
(71) Applicant: EATON CORPORATION, Cleveland, Ohio 44114-2584 (US)
(72) Inventor: Elms, Robert Tracy, Monroeville, Pennsylvania 15146 (US)
(74) Representative: Wagner, Karl H., Dipl.-Ing.

(57) **Abstract**

The settings for the digital processor (25) of apparatus (1) for monitoring an ac electrical distribution system (33) are programmed through a single dip switch (47) and a single multiposition, binary coded decimal (BCD) switch (49) which maps the settings of each of the two-position switches (46) of the dip switch to different memory locations (50) in an EEPROM (51). The stored settings for each switch (46) of the dip switch (47) for a selected position of the BCD switch (49) are displayed on an LED bar graph (55). The stored settings are only updated to the current positions of the switches of the dip switch (47) upon activation of a "PROG" switch (53). This arrangement of switches (47, 49, 53) and the EEPROM (51) replace the multiple dip switches previously required to program all of the settings of the monitor (1).

## Description

### BACKGROUND OF THE INVENTION

### Field of the Invention

This invention relates to apparatus for digitally processing waveforms of an electrical distribution system in a manner determined by settings programmed by user set switches, and in particular, by a minimal arrangement of user operated switches.

### Background Information

Various types of apparatus used with electrical distribution systems such as circuit breakers, motor starters and monitors/analyzers, are now controlled by microcomputers. In order to increase the flexibility of such apparatus and meet the needs of users in various applications, it is common to provide a number of programmable settings for the apparatus. In the case of monitors/analyzers, such programmable settings can include for instance, conversion factors for current transformers and potential transformers, features provided such as loss of phase, overvoltage, undervoltage, frequency of the system being monitored/analyzed, and responses to various conditions such as generating an alarm signal, recording a value, lighting a light emitting diode (LED), and so forth.

A common device used for programming the various settings in such apparatus is the dip (duel in line package) switch. The dip switch is a module containing a number, for instance eight, two-position miniature switches, each of which can be used to set a digital bit to a 0 or a 1. Some settings require multiple switches. for instance, two switches can be used to provide four different digital values or conditions for a particular setting. Commonly, multiple dip switches are required to accommodate all of the settings which need to be made. For instance, the monitor described in U.S. patent number 4,700,880, utilizes six, eight bit dip switches which together provide 48 selectable bits. This number of dip switches adds to the cost and space required in the apparatus.

There is a need therefore, for improved apparatus in which a desired number of digital settings can be provided by fewer switches than are currently required.

There is a further need for such improved apparatus having digital programming switches which provide indication of the present value of the setting before a change is made.

There is a primary need for such improved apparatus in which the same number of digital settings can be made with devices which require less space and are less costly than the present hardware.

### SUMMARY OF THE INVENTION

These needs and other are satisfied by the invention which is directed to apparatus for use with an electrical distribution system and includes digital processing means for generating outputs in response to waveforms in the electrical distribution system that are determined by a plurality of programmable settings. The settings are made by programming means comprising a single set of two-position, manually setable switches which are fewer in number than the plurality of settings required. Preferably, this single set of two-position switches is implemented by a single dip switch. The expanded capability is provided by a multiposition switch that selectively maps each of the two-position switches to a different associated memory location for each position of the multiposition switch. Thus, the single set of two-position switches is able to set all of the programmable settings for the apparatus.

In order to avoid having settings change as the multiposition switch is cycled from one position to the next, a save or program switch is provided which must be actuated before the settings in memory are changed by the positions of the two-position switches. This allows the user to first select the positions of the two-position switches for the new position of the multiposition switch before the settings in memory are modified.

In order to provide an indication of what the stored settings are, digital indicator means, preferably in the form of LEDs, are provided. If after observing the stored settings it is desired to make changes, the two-position switches are set, and then the program button is actuated to store the changes. The LEDs also permit a user to observe changes made to stored settings remotely through a communications port.

### BRIEF DESCRIPTION OF THE DRAWINGS

A full understanding of the invention can be gained from the following description of the preferred embodiments when read in conjunction with the accompanying drawings in which:
Figure 1 is an elevation view of a front panel of apparatus incorporating the invention.
Figure 2 is a schematic diagram in block form of the apparatus of Figure 1.
Figure 3 is an elevation view of the rear face of the apparatus of Figure 1 illustrating the arrangement for programming the settings for the apparatus.
Figure 4 is a flow chart of a routine used by the microcomputer which forms part of the circuit of Figure 2 to implement the invention.

### DESCRIPTION OF THE PREFERRED EMBODIMENT

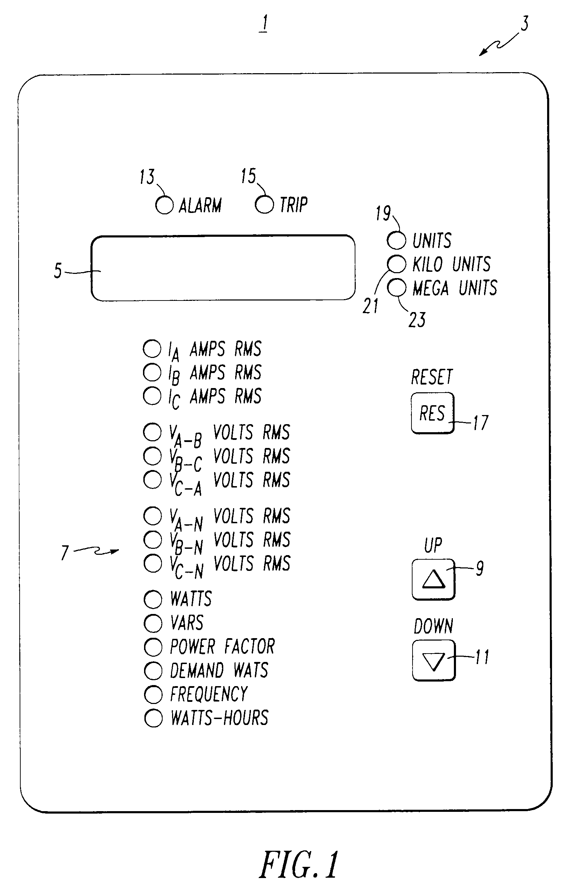

Figure 1 illustrates a device designed to both monitor and display electrical parameters as well as to protect industrial equipment connected to an electrical distribution system. The device 1 meters each phase of ac line current, line-to-line voltages, line-to-neutral voltages, watts, vars, power factor, peek demand, frequency and watt-hours. It also detects conditions which exceed user chosen values of these electrical parameters and may also protect against such conditions as: phase loss, phase unbalance, phase reversal, undervoltage and overvoltage.

The front panel 3 of the device 1 includes a display window 5 in which the value of 15 monitored parameters are selectively presented. These parameters are listed below the window with LEDs 7 indicating the parameter currently being displayed. The parameter to be displayed is selected by the up and down push buttons 9 and 11.

If programmed tolerances are exceeded, the device 1 will enable an internal alarm and/or a trip relay. An alarm condition is indicated by illumination of the alarm LED 13 while a trip condition will energize the LED 15. The alarm or trip indication can be cancelled by actuation of the reset push button 17. LEDs 19, 21 and 23 indicate whether the parameter displayed in the window 5 is in units, kilo-units, or mega-units, respectively.

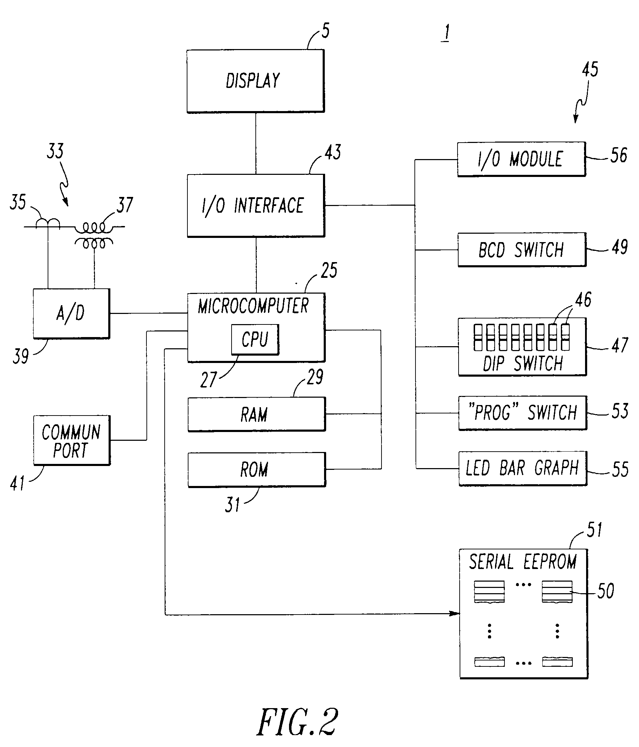

Turning to Figure 2, the heart of the device 1 is a microcomputer 25 which includes a digital processor in the form of a central processing unit (CPU) 27. A random access memory (RAM) 29 provides temporary storage for the microcomputer 25 and a read only memory (ROM) 31 provides permanent storage including the routines run by the CPU 27.

The waveforms in an electrical distribution system 33 are sensed by current transformers 35 and potential transformers 37. These analog waveforms are digitized for input to the microcomputer 25 by an analog-to-digital (A/D) converter 39. A communications port 41 connects the microcomputer 25 with a remote unit (not shown). The microcomputer 25 can transmit its metered values, alarms and trip signals to the remote unit, and can receive signals from the remote unit such as remote trip signals. The programmable settings can also be changed remotely through the communications port.

Parameter values generated by the digital processor 27 are provided to the display 5 through an input/output interface 43. The input/output interface 43 also provides communication between the microcomputer 25 and the programmer 45. The programmer 45 includes a single set of a number of two-position switches 46, preferably in the form of a single dip switch 47. In the illustrative programmer 43, the dip switch 47 is an eight-bit dip switch. In order for the single, eight-bit dip switch 47 to provide all of the settings required by the digital processor 27, a single multiposition, binary coded decimal (BCD) switch 49 maps the setting of each of the two-position switches 46 of the dip switch 47 to a different memory location 50 in a serial electrically erasable programmable read only memory (EEPROM) 51 serving the microcomputer 25. The multiposition switch 49 has ten positions, so that the single dip switch 47 can be used in place of ten dip switches, thereby greatly reducing the space required for the programmer 45 and also reducing the cost. The BCD switch 49 provides the address of the location 50 in the memory 51 in which the settings of the dip switch 47 are stored. In some cases, more than one of the two-position switches on the dip switch 47 are used to generate settings for a single parameter. For instance, five of the two-position switches are used to make the turns ratio setting for the current transformers. This would permit selection of 32 different turns ratios, although in the illustrative device only 19 of the possible 32 settings are utilized.

Typically in the illustrative system, the protection functions each use two of the two-position switches 46 on the dip switch 47. This provides four possible responses: activate trip relay, activate alarm relay, activate both trip and alarm relay, activate neither trip nor alarm relay. These settings are provided for instance for over-voltage detection response, undervoltage detection response phase loss/reversal detection response and phase unbalance detection response.

As can be appreciated, it is desirable that the settings of the dip switch 47 not be automatically entered into memory 51 upon selection of a new position of the multiposition switch 49. Without such a feature, the settings of the dip switch 47 for one position of the multiposition switch 49 would be repeated when the multiposition switch was indexed. In order to prevent this, a program ("PROG") switch 53 is provided in the programmer 45. The "PROG" switch must be actuated before the settings of the dip switch are copied into the memory 51. This permits the positions of the two-position switches on the dip switch to be set as desired upon changing to a new position of the switch 49.

A set of LEDs 55 forming an LED bar graph is provided in the programmer 45 to indicate to the user the settings which are stored in the memory 51. Thus, when the new position of the BCD switch 49 is established, the LED bar graph 55 indicates the settings stored in the memory 51 despite the present position of the two-position switches on the dip switch 47. If a change to be made, the dip switch is set as desired and then the "PROG" button 53 is pressed to effect the update.

An input/output (I/O) module 56 is also serviced by the I/O interface 43. This I/O module provides relay outputs such as for alarms, and discrete inputs such as synchronization signals and a remote reset signal.

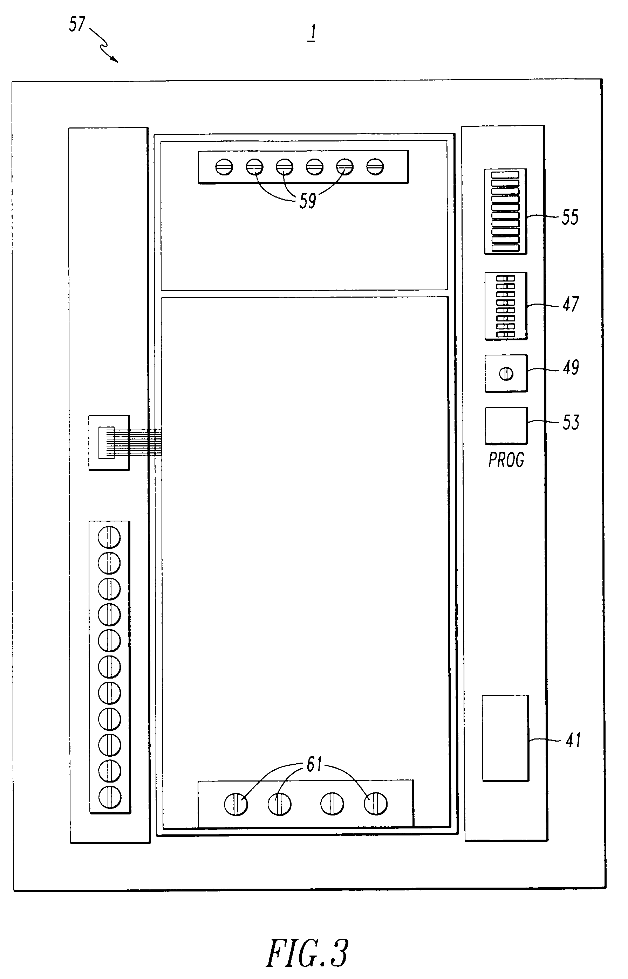

Figure 3 shows the rear face 57 of the device 1. Connections 59 provide for input from the current transformers while the voltage leads are connected to the terminals 61. The LED bar graph 55, the single dip switch 47, the single multiposition switch 49 and the "PROG" switch 53 of the programmer 45 are vertically aligned along the right side of the panel. As can be readily appreciated, this array of switches and indicator lights requires considerably less room than a series of dip switches. As mentioned, the communications port 41 permits interchange with a remote computer (not shown). This can include remote changing of the parameter settings which can be read through the LED bar graph 55. These remotely made changes in the parameter settings can be modified by use of the dip switch and program switch.

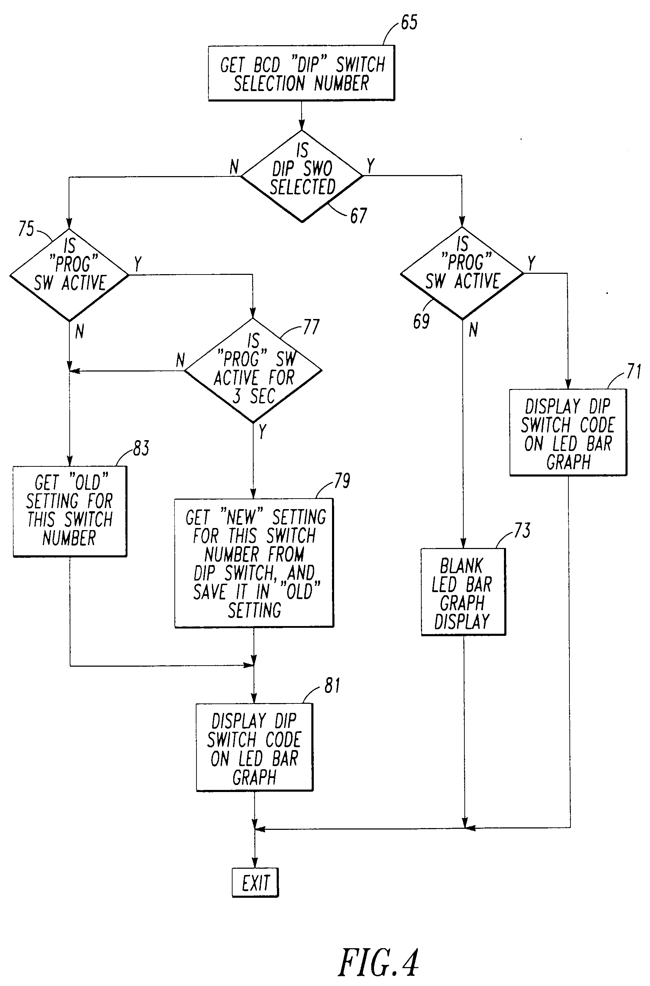

Figure 4 illustrates a routine 63 implemented by the processor 27 to effect programming of the settings for the device 1. The "0" position of the multiposition switch 49 is used for a test. When the routine 63 is entered the setting of the multiposition BCD switch 49 is read at 65. If the 0 position, SW0, is selected as determined at 67 and the "PROG" switch 53 is activated at 69, the settings of the dip switch 47 are displayed on the LED bar graph 55 at 71, otherwise, the LED bar graph is blanked at 73.

If the BCD switch 49 is in the position other than the SW0 position when checked at 57 and if the "PROG" switch is activated as determined at 75 it remains activated for at least three seconds as determined at 77, then the settings of the two-position switches 46 of the dip switch 47 are saved in the associated memory location 50 of the EEPROM 51 at 79 and are displayed on the LED bar graph 55 at 81. If the PROG switch has not been activated for at least three seconds, as determined at 75 and 77, than the stored setting is retrieved at 83 and displayed on the LED bar graph 55 as indicated at 81.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of invention which is to be given the full breadth of the claims appended and any and all equivalents thereof.

## Claims

1. Electrical apparatus (1) for use with an electrical distribution system (33), said apparatus comprising:
sensing means (35, 37) for sensing waveforms in said electrical distribution system (33);
digital processing means (25) for digitally processing said waveforms in accordance with a plurality programmable settings to generate selected outputs in response to said waveforms and having memory means (51) with multiple memory locations (50) for storing said plurality of programmable settings; and
programming means (45) for reading and setting each of said plurality of programmable settings comprising:
a single set (47) of a number of manually settable two-position switches (46), said number of two-position switches in said set being less than said plurality;
a single multiposition switch (49) selectively mapping each of said number of two-position switches (46) to a different associated one of said memory locations (50) in said memory means (51) for each position of said multiposition switch (49), whereby said single set (47) of two-position switches (46) is able to set said plurality of programmable settings.

2. The apparatus (1) of Claim 1 wherein said single set (47) of two-position switches (46) comprises a single dip switch module.

3. The apparatus (1) of Claim 1 wherein said programming means (45) further includes program switch means (53) which change said programmable settings stored in memory locations in said memory means associated with said set (47) of two-position switches (46) for a given position of said multiposition switch (49) to settings indicated by said two-position switches (46) only through actuation of said program switch means (53).

4. The apparatus (1) of Claim 3 wherein said programming means (45) further includes digital indicator means (55) indicating the programmable settings stored in the memory locations (50) in said memory means (51) associated with each of the number of two-position switches (46) for the position of the multiposition switch (49).

5. The apparatus (1) of Claim 4 wherein said digital indicator means (55) comprises a number of light emitting diodes equal in number to said number of two-position switches (46) in said set (47) of two-position switches.

6. The apparatus (1) of Claim 5 wherein said single set (47) of two position switches (46) comprises a single dip switch module.

7. The apparatus (1) of Claim 4 including communications means (41) for remote changing of said programmable settings stored in memory locations (50) in said memory means (51).
